# EUROPÄISCHE PATENTANMELDUNG

(11) **EP 1 513 236 A2**
(43) Veröffentlichungstag der Anmeldung: **09.03.2005**
(21) Anmeldenummer: 04090281.9
(22) Anmeldetag: 19.07.2004
(51) Int. Cl.: H02B 13/035

(54) **Druckgasisolierter Kabelanschlussbaustein**

(30) Priorität: 02.09.2003 DE 10341302
(71) Anmelder: SIEMENS AKTIENGESELLSCHAFT, 80333 München (DE)
(72) Erfinder: Laskowski, Karsten, 13467 Berlin (DE); Meinherz, Manfred, 13467 Berlin (DE)

(57) **Zusammenfassung**

Zur Verbindung mehrerer Schaltfelder einer druckgasisolierten Schaltanlage sind Kabelanschlussbausteine
(1,20,30,40,50,60,70) vorgesehen, an welche Kabel zur Verbindung der Schaltfelder anschließbar sind. Die Kabelanschlussbausteine (1,20,30,40,50,60,70) weisen Trennschalter (21) sowie Erdungsschalter (22) auf.

## Beschreibung

Die Erfindung bezieht sich auf einen druckgasisolierten Kabelanschlussbaustein, insbesondere für eine druckgasisolierte Schaltanlage, wobei der Kabelanschlussbaustein eine mehrpolige erste Kabelanschlussarmatur und eine mehrpolige zweite Kabelanschlussarmatur aufweist.

Ein Kabelendverschluss mit zwei Kabelanschlussarmaturen ist beispielsweise aus der Offenlegungsschrift DE 24 59 737 A1 bekannt. Der dortige Kabelendverschluss ist jedoch einpolig gekapselt ausgeführt und zur Montage an einer vollisolierten metallgekapselten Hochspannungsschaltanlage vorgesehen. Bei dem bekannten Kabelendverschluss ist ein erstes Kabel an ein stromführendes Innenteil angeschlossen. Mittels eines Prüfadapters ist ein zweites Kabel bedarfsweise anschließbar. Dabei sind die Kabelanschlussarmaturen derart angeordnet, dass die Kabel nahezu parallel zueinander, in die gleiche Richtung verlaufend, angeordnet sind. Durch die Parallelführung der Kabel ist die Verwendbarkeit des bekannten Kabelendverschlusses eingeschränkt.

Der Erfindung liegt die Aufgabe zugrunde, einen druckgasisolierten Kabelanschlussbaustein der eingangs genannten Art derart auszubilden, dass ein flexibler Anschluss von Kabeln an den druckgasisolierten Kabelanschlussbaustein ermöglicht ist.

Die Aufgabe wird bei einem druckgasisolierten Kabelanschlussbaustein der eingangs genannten Art erfindungsgemäß dadurch gelöst, dass die erste und die zweite Kabelanschlussarmatur derart angeordnet sind, dass ein an die erste Kabelanschlussarmatur angeschlossenes erstes Kabel und ein an die zweite Kabelanschlussarmatur angeschlossenes zweites Kabel aus entgegengesetzt zueinander liegenden Richtungen am Kabelanschlussbaustein auf diesen zulaufen und die Pole jeder Kabelanschlussarmatur jeweils im Querschnitt gesehen auf einer Kreisbahn verteilt angeordnet sind.

Die Ausrichtung der Kabelanschlussarmaturen mit einem entgegengesetzt zueinander liegenden Richtungssinn bezüglich der Anschlussmöglichkeit der Kabel gestattet es, den druckgasisolierten Anschlussbaustein flexibel einzusetzen. Ausgehend von dem Kabelanschlussbaustein müssen die Kabel jeweils nur um maximal 90° ausgebogen werden, um die angeschlossenen Kabel aus vielen Richtungen anzuschließen. Gegenüber der Parallelanordnung zweier Kabel an einem Kabelanschlussbaustein sind so weniger Richtungswechsel durch die Kabel zu realisieren. Weiterhin ist bei einer Anordnung der Pole der Kabelanschlussarmaturen auf einer Kreisbahn eine kompakte Ausgestaltung des Gehäuses des Kabelanschlussbausteines ermöglicht. Besonders vorteilhaft ist dabei eine gleichmäßige Verteilung der einzelnen Pole auf der Kreisbahn. Für eine dreipolige Kabelanschlussarmatur ergibt sich so im Querschnitt gesehen eine dreieckige Anordnung, wobei die Pole jeweils die Endpunkte des Dreieckes bilden und das Dreieck gleichseitig ist. Weiterhin wird durch die gleichmäßige Anordnung der Pole der Kabelanschlussarmaturen auf einer Kreisbahn eine symmetrische Verteilung der einzelnen Leiter der Kabel auch außerhalb des Kabelanschlussbausteines erzwungen. Insbesondere bei der Verwendung von Einleiterkabeln entsteht so eine Anordnung, deren elektrisches Feld nach außen homogen gestaltet ist. So ist es beispielsweise möglich, dass das die Einleiterkabel umgebende elektrische Feld gegenüber einem nebeneinanderliegende Leiter eines mehrphasigen Wechselspannungssystems umgebenden elektrischen Feld reduziert ist.

Vorteilhaft kann weiterhin eine mehrpolige dritte Anschlussvorrichtung vorgesehen sein.

Eine mehrpolige dritte Anschlussvorrichtung gestattet es, den Kabelanschlussbaustein noch flexibler einzusetzen. Durch die dritte Anschlussvorrichtung ist eine Nutzung des Kabelanschlussbausteins als Verteilerknoten möglich. Somit kann der Kabelanschlussbaustein beispielsweise in einer Schaltanlage eingesetzt werden, um drei oder mehr Schaltfelder der Schaltanlage miteinander elektrisch zu verbinden. Dabei fungiert der Kabelanschlussbaustein gemeinsam mit dem angeschlossenen Kabeln als Sammelschiene der Schaltanlage. Eine derartig ausgestaltete Sammelschiene kann sehr flexibel an verschiedenen Aufstellungen der Schaltfelder angepasst werden, da die Kabel verglichen mit einem druckgasisolierten Leiterabschnitt eine hohe Verformbarkeit aufweisen und leicht an die Montagegegebenheiten anpassbar sind.

Es kann weiterhin vorteilhaft vorgesehen sein, dass die dritte Anschlussvorrichtung eine mehrpolige Kabelanschlussarmatur ist.

Bei einer Ausgestaltung der dritten Anschlussvorrichtung als mehrpolige Kabelanschlussarmatur kann der druckgasisolierte Kabelanschlussbaustein als Kabelverteiler in einer Schaltanlage Verwendung finden. Dabei kann der Kabelverteiler zentral aufgestellt sein und von den einzelnen Kabelanschlussarmaturen können die Kabel beispielsweise sternförmig fortführen. Somit ergeben sich für eine Ausgestaltung einer Schaltanlage Varianten, bei denen die einzelnen Schaltfelder nunmehr unabhängig voneinander sehr flexibel verteilt sein können, da sie über leicht verlegbare Kabel miteinander verbunden sind.

Vorteilhafterweise kann weiterhin vorgesehen sein, dass die dritte Anschlussvorrichtung eine mehrpolige Druckgas/Druckgas-Durchführung ist.

Die Ausgestaltung der dritten Anschlussvorrichtung als Druckgas/Druckgas-Durchführung gestattet es, den Kabelverteiler beispielsweise unmittelbar an ein Schaltfeld, welches ebenfalls druckgasisoliert ist, anzuflanschen. Dadurch sind zusätzliche Traggestelle bzw. Aufständerungen nicht erforderlich. Insbesondere bei der Nachrüstung bestehender Anlagen bietet es sich an, statt eines herkömmlichen Kabelendverschlusses nunmehr einen Kabelanschlussbaustein mit mehreren Anschlussvorrichtungen einzusetzen und so eine flexible Aufteilung und Verteilung von elektrischer Energie innerhalb einer Schaltanlage zu ermöglichen.

Weiterhin kann vorteilhaft vorgesehen sein, dass die dritte Anschlussvorrichtung bezüglich der ersten und der zweiten Anschlussarmatur derart angeordnet ist, dass ein T-förmiges Anschließen der Kabel bzw. der elektrischen Leiter der Druckgas/Druckgas-Durchführung an den Kabelanschlussbaustein ermöglicht ist.

Ein T-förmiges Anschließen von Kabeln bzw. elektrischen Leitern ermöglicht es zum einen an der bekannten Ausrichtung von Schaltfeldern einer Schaltanlage parallel bzw. rechtwinklig zueinander angeordnet festzuhalten und somit einen Kabelanschlussbaustein auch an bekannten Schaltanlagensystemen einzusetzen bzw. nachzurüsten. Weiterhin ist auch bei einer derartigen Anordnung der Anschlussstellen ein hinreichend flexibler Einsatz des Kabelanschlussbausteines gegeben.

Vorteilhaft kann weiterhin vorgesehen sein, dass alle abgehenden Kabel bzw. Leiter von dem Kabelanschlussbaustein in einer Horizontalen annähernd parallel angeordnet sind.

Durch die liegende Anordnung der Kabel ist es möglich, die Kabel auf direktem Weg zu einem weiteren Kabelanschlussbaustein oder zu einem Schaltfeld zu verteilen. Damit ist die Anzahl der Richtungswechsel entlang der Kabeltrassen vermindert.

Vorteilhafterweise kann weiterhin vorgesehen sein, dass zwischen einander zugeordneten Polen der ersten Kabelanschlussarmatur und der zweiten Kabelanschlussarmatur eine elektrisch leitende Verbindung angeordnet ist.

Eine fest zugeordnete elektrisch leitende Verbindung kann sehr kostengünstig hergestellt werden. Dabei ist die Zuverlässigkeit einer derartigen Verbindung als hoch einzuschätzen. Somit kann eine dauerhafte Verbindung der Pole zweier Kabelanschlussarmaturen erzeugt werden.

Weiterhin kann vorteilhaft vorgesehen sein, dass zwischen einander zugeordneten Polen der ersten Kabelanschlussarmatur und der zweiten Kabelanschlussarmatur eine mittels Schalters auftrennbare elektrische Verbindung angeordnet ist.

Eine mittels Schalter auftrennbare elektrische Verbindung gestattet es dem druckgasisolierten Kabelanschlussbaustein sehr flexibel einzusetzen. So kann der Schalter beispielsweise als Trennschalter in einer elektrischen Schaltanlage Verwendung finden und dort eine Längstrennung einer Sammelschiene ermöglichen. Weiterhin kann der Schalter auch genutzt werden, um bei einer Verwendung eines druckgasisolierten Kabelanschlussbausteins als Verteilerknoten nur bestimmte Abgänge miteinander zu verbinden und andere Abgänge abzutrennen. Damit ist es beispielsweise innerhalb einer Schaltanlage möglich, die Anzahl der notwendigen Schalter zu reduzieren, da Auftrennungen von Leiterabschnitten, die bisher innerhalb der Schaltfelder erfolgt sind, nunmehr innerhalb eines Kabelanschlussbausteines an einem zentralen Punkt realisierbar sind.

Es kann weiter vorgesehen sein, dass die elektrisch leitende Verbindung mittels eines Erdungsschalters erdbar ist.

Die Verwendung eines Erdungsschalters innerhalb eines Kabelanschlussbausteines führt zu einer Reduzierung notwendiger Erdungsschalter innerhalb einer Schaltanlage. Mehrere Abschnitte können zentral durch einen Erdungsschalter innerhalb des druckgasisolierten Kabelanschlussbausteines geerdet werden.

Eine weitere Aufgabe der Erfindung ist es, einen Kabelanschlussbaustein anzugeben, welcher besonders zur Verteilung einer Einspeisung auf zwei gespeiste Kabel geeignet ist. Erfindungsgemäß wird dies bei einem druckgasisolierten Kabelanschlussbaustein, insbesondere für eine druckgasisolierte Schaltanlage, wobei der Kabelanschlussbaustein eine ein- oder mehrpolige erste Kabelanschlussarmatur und eine ein- oder mehrpolige zweite Kabelanschlussarmatur aufweist, dadurch gelöst, dass die erste und die zweite Kabelanschlussarmatur derart angeordnet sind, dass ein an die erste Kabelanschlussarmatur angeschlossenes erstes Kabel und ein an die zweite Kabelanschlussarmatur angeschlossenes zweites Kabel von dem Kabelanschlussbaustein V-förmig auseinanderstreben.

Durch das V-förmige Auseinanderstreben der Kabel sind die Vorteile einer parallelen Führung mehrerer Kabel mit relativ geringen Platzbedarf kombiniert mit einer flexiblen Auslenkung und Führung der Kabel von dem Kabelanschlussbaustein fort. Einerseits sind so aufwendige schleifenförmige Verlegungen von Kabeln vermieden, andererseits kann ein derartiger Kabelanschlussbaustein in seinem Inneren aus einfachen Leiterzügen gebildet sein. Aufwendige Überkreuzungen von Leiterabschnitten innerhalb des Kabelanschlussbausteines sind so vermieden.

Im Folgenden wird ein Ausführungsbeispiel der Erfindung in einer Zeichnung schematisch gezeigt und nachfolgend näher beschrieben. Dabei zeigt die
- Figur 1: einen ersten Kabelanschlussbaustein, die
- Figur 2: einen zweiten Kabelanschlussbaustein, die
- Figur 3: einen dritten Kabelanschlussbaustein, die
- Figur 4: einen vierten Kabelanschlussbaustein, die
- Figur 5: einen fünften Kabelanschlussbaustein, die
- Figur 6: einen sechsten Kabelanschlussbaustein, die
- Figur 7: einen siebenten Kabelanschlussbaustein, die
- Figur 8: einen achten Kabelanschlussbaustein im montierten Zustand und die
- Figur 9: eine Seitenansicht auf die Achse A-A des in der Figur 4 dargestellten vierten Kabelanschlussbausteins.

Die in den Figuren abgebildeten Kabelanschlussbausteine sind jeweils im Schnitt dargestellt. In den Figuren gleichwirkende Elemente sind mit den gleichen Bezugszeichen versehen.

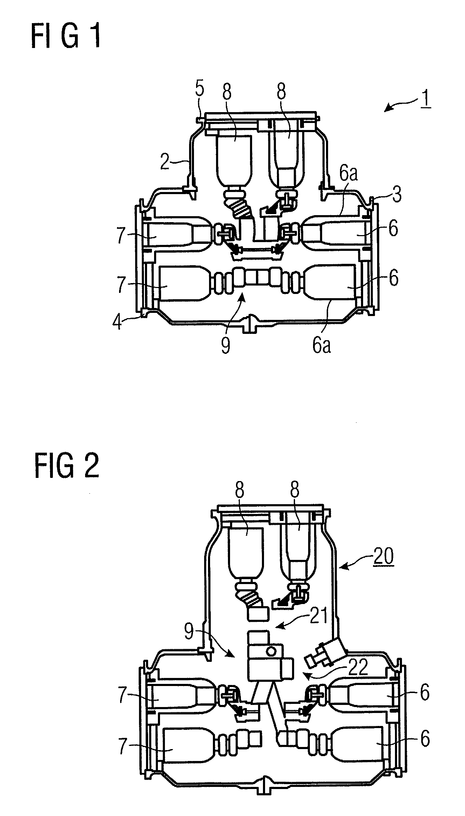

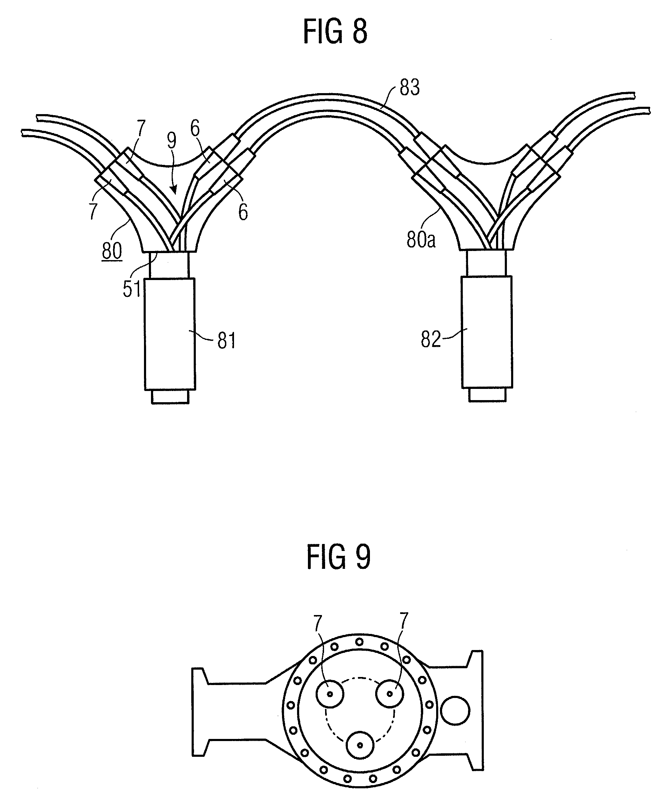

Der erste in der Figur 1 dargestellte Kabelanschlussbaustein 1 weist ein Kapselungsgehäuse 2 auf. Das Kapselungsgehäuse 2 kann aus mehreren Gussteilen zusammengesetzt sein. Das Kapselungsgehäuse 2 weist einen ersten Flansch 3, einen zweiten Flansch 4 sowie einen dritten Flansch 5 auf. Die Flansche 3, 4, 5 sind jeweils durch eine Deckplatte verschlossen. In die Deckplatte des ersten Flansches 3 ist eine mehrpolige erste Kabelanschlussarmatur 6 eingebracht. In die Deckplatte des zweiten Flansches 4 ist eine mehrpolige zweite Kabelanschlussarmatur 7 eingebracht. In die Deckplatte des dritten Flansches 5 ist eine mehrpolige dritte Kabelanschlussarmatur 8 eingebracht. Die erste, die zweite und die dritte Kabelanschlussarmatur 6, 7, 8 sind jeweils dreipolig ausgeführt. Bei Blickrichtung auf einen der Flansche 3, 4, 5 sind die drei Phasen jeder der Kabelanschlussarmaturen 6, 7, 8 auf einer Kreisbahn symmetrisch verteilt angeordnet (vgl. auch Beschreibung der Figur 9).

Der Aufbau einer Kabelanschlussarmatur soll beispielhaft an der ersten Kabelanschlussarmatur 6 beschrieben werden. Jeder Pol der ersten Kabelanschlussarmatur 6 weist eine Hülse 6a auf. Diese Hülse dichtet das Kapselungsgehäuse 2 ab. In die Hülse 6a ist ein Kabel einführbar. Im Bodenbereich der Hülse 6a ist eine Kontaktierungseinrichtung angeordnet. An der Kontaktierungseinrichtung wird ein Leiter des in die jeweilige Hülse eingeführten Kabels elektrisch kontaktiert. Mit der Kontaktierungseinrichtung ist der elektrische Leiter gasdicht durch die Wandung des Kapselungsgehäuses 2 hindurchgeführt. Im Innern des Kapselungsgehäuses 2 sind die zugehörigen Kon-taktierungseinrichtungen der einzelnen Kabelanschlussarmaturen 6, 7, 8 durch elektrisch leitende Leiterstücke 9 elektrisch leitend verbunden. Somit sind die einander zugeordneten Pole der drei Kabelanschlussarmaturen 6, 7, 8 elektrisch leitend miteinander verbunden, so dass in die Kabelanschlussarmaturen 6, 7, 8 eingeführte Kabel miteinander elektrisch kontaktiert sind. Die Flansche 3, 4, 5 sind dabei derart angeordnet, dass die an die erste, zweite und dritte Kabelanschlussarmatur 6, 7, 8 anschließbaren Kabel T-förmig von dem Kapselungsgehäuse 2 fortragen. Vorteilhafterweise können dabei die angeschlossenen Kabel in annähernd horizontal liegend angeordnet sein.

Die Figur 2 zeigt eine Fortentwicklung des aus der Figur 1 bekannten ersten Kabelanschlussbausteines 1. Der zweite Kabelanschlussbaustein 20 weist die gleiche Grundstruktur auf, wie der erste Kabelanschlussbaustein 1. Die elektrisch leitenden Leiterstücke 9, welche die erste, die zweite und die dritte Kabelanschlussarmatur 6, 7 und 8 miteinander elektrisch leitend verbinden, sind jedoch mittels eines Trennschalters 21 auftrennbar, und zwar derart, dass die elektrische Verbindung zwischen der dritten Kabelanschlussarmatur 8 von den elektrischen Verbindungen der dauerhaft elektrisch leitend verbundenen ersten und zweiten Kabelanschlussarmatur 6, 7 abtrennbar ist. Weiterhin weist der zweite Kabelanschlussbaustein 20 einen Erdungsschalter 22 auf. Mittels des Erdungsschalters 22 sind die elektrisch leitenden Leiterstücke 9, welche die zusammengehörigen Pole der ersten Kabelanschlussarmatur 6 und der zweiten Kabelanschlussarmatur 7 elektrisch leitend verbinden, mit einem Erdpotential beaufschlagbar. Dazu kann in bekannter Weise das Kapselungsgehäuse des zweiten Kabelanschlussbausteines 20 aus einen elektrisch leitenden Material bestehen und der Er-dungskontkt des Erdungsschalters 22 an dem Gehäuse befestigt und mit diesem elektrisch leitend verbunden sein. Durch eine derartige Ausführung ist es möglich, beispielsweise die dritte Kabelanschlussarmatur 8 zum Einspeisen von Elektroenergie zu nutzen und die erste und zweite Kabelanschlussarmatur 6, 7 als Abgang zu nutzen. Über den Trennschalter 21 ist die Einspeisung abtrennbar und über den Erdungsschalter 22 sind die Abgänge erdbar.

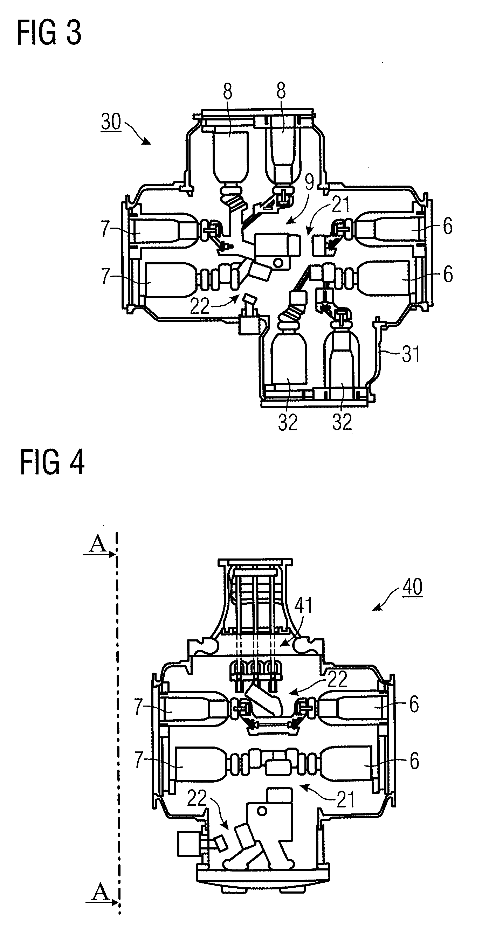

Die Figur 3 zeigt einen dritten Kabelanschlussbaustein 30, welcher auf einer Fortentwicklung des zweiten Kabelanschlussbausteines 20 beruht. Der dritte Kabelanschlussbaustein 30 weist eine erste Kabelanschlussarmatur 6, eine zweite Kabelanschlussarmatur 7 sowie eine dritte Kabelanschlussarmatur 8 auf. Zusätzlich ist ein vierter Flansch 31 an dem dritten Kabelanschlussbaustein 30 angeordnet. An dem vierten Flansch 31 ist eine vierte Kabelanschlussarmatur 32 angeordnet. Die vier Kabelanschlussarmaturen 6, 7, 8, 32 sind so angeordnet, dass sie kreuzförmig zueinander liegen. Somit ist ein Anschluss von vier Kabeln an die vier Kabelanschlussarmaturen 6, 7, 8, 32 möglich, die kreuzförmig jeweils im Winkel von annähernd 90° zueinander liegen. Die elektrisch leitenden Leiterstücke 9 des dritten Kabelanschlussbausteines 30 sind bei dem vorliegenden Ausgestaltungsbeispiels derart angeordnet, dass die zusammengehörigen Pole der zweiten Kabelanschlussarmatur 7 und der dritten Kabelanschlussarmatur 8 dauerhaft elektrisch leitend miteinander verbunden sind. Ebenso sind die zusammengehörigen Pole der ersten Kabelanschlussarmatur 6 und der vierten Kabelanschlussarmatur 32 über elektrisch leitende Verbindungen dauerhaft elektrisch leitend miteinander verbunden. Die beiden Gruppen, jeweils gebildet aus der zweiten Kabelanschlussarmatur 7 und der dritten Kabelanschlussarmatur 8 sowie der ersten Kabelanschlussarmatur 6 und der vierten Ka-belanschlussarmatur 32, sind mittels eines Trennschalters 21 voneinander trennbar. Weiterhin sind die elektrisch leitenden Verbindungen, welche die einzelnen Pole der zweiten Kabelanschlussarmatur 7 und der dritten Kabelanschlussarmatur 8 miteinander verbinden, über einen Erdungsschalter 22 erdbar.

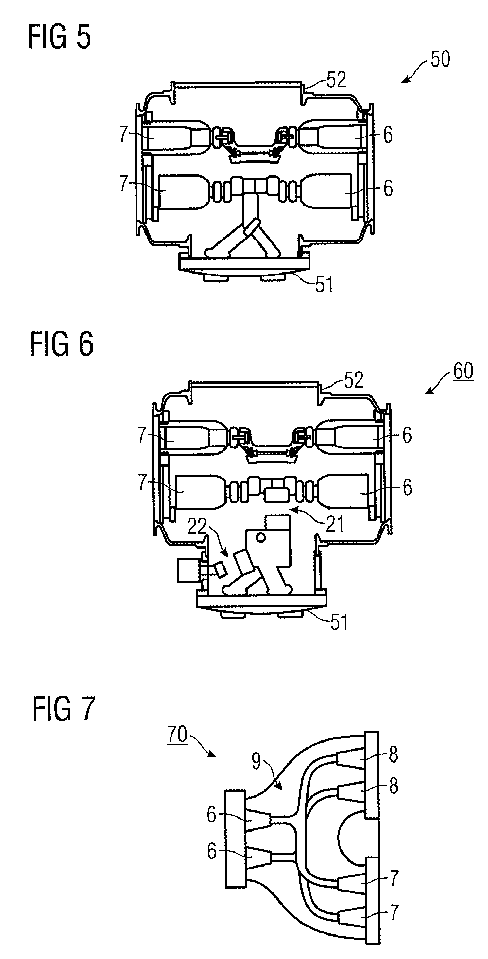

Die Figuren 5 und 6 zeigen jeweils Abwandlungen des ersten Kabelanschlussbausteines 1 sowie des zweiten Kabelanschlussbausteins 20. Die Figur 5 zeigt einen fünften Kabelanschlussbaustein 50, welcher eine erste Kabelanschlussarmatur 6 sowie eine zweite Kabelanschlussarmatur 7 aufweist. Die erste Kabelanschlussarmatur 6 und die zweite Kabelanschlussarmatur 7 sind, wie von dem ersten Kapselungsgehäusebaustein 1 bekannt, angeordnet. Statt der dritten Kabelanschlussarmatur 8, wie aus der Figur 1 bekannt, ist der fünfte Kabelanschlussbaustein 50 mit einer Druckgas/Druckgas-Durchführung 51 ausgestattet. Als weitere Besonderheit weist das Kapselungsgehäuse des fünften Kapselungsbausteines 50 einen vierten Anschlussflansch 52 auf. Der vierte Anschlussflansch 52 ist mit einem Blindverschluss verschlossen, der beispielsweise durch einen weitere Druckgas/Druckgas-Durchführung oder einen weiteren Kabelanschlussarmatur ersetzt werden kann. Mittels der Druckgas/Druckgas-Durchführung 51 ist der fünfte Kabelanschlussbaustein 50 beispielsweise an ein Schaltfeld einer druckgasisolierten Schaltanlage anflanschbar. Die Befestigung kann dabei derart erfolgen, dass die an der ersten und der zweiten Kabelanschlussarmatur 6, 7 angeschlossenen Kabel in einer horizontalen, von dem fünften Kabelanschlussbaustein 50 fortführen. Dadurch können über die anschließbaren Kabel weitere Schaltfelder, welche auch mit Kabelanschlussbausteinen ausgerüstet sein können, angeschlossen werden, ohne Umlenkungen in eine vertikale Richtung vornehmen zu müssen.

Die Figur 6 zeigt eine Abwandlung des aus der Figur 2 bekannten zweiten Kapselungsbausteines 20. Der sechste Kabelanschlussbaustein 60 weist wiederum eine erste Kabelanschlussarmatur 6 sowie eine zweite Kabelanschlussarmatur 7 auf. Statt des bei dem zweiten Kabelanschlussbaustein 20 verwendeten dritten Kabelanschlussarmatur 8 kommt eine Druckgas/Druckgas-Durchführung 51 zum Einsatz. Der durch die Druckgas/Druckgas-Durchführung 51 gebildete Abgang ist mittels eines Trennschalters 21 abtrennbar. Weiterhin ist dieser Abgang mittels eines Erdungsschalters 22 erdbar.

Die Figur 4 zeigt einen vierten Kabelanschlussbaustein 40. Der vierte Kabelanschlussbaustein 40 weist dieselbe Struktur auf wie der in der Figur 6 dargestellte sechste Kabelanschlussbaustein 60. Der in der Figur 6 mit einem Blindverschluss versehene vierte Flansch 52 ist bei dem vierten Kabelanschlussbaustein 40 mit einem Erdungskontakt 41 versehen. Der Erdungskontakt 41 ermöglicht es mittels eines Erdungsschalters 22 die elektrisch leitenden Verbindungen, welche die Pole der ersten Anschlussarmatur 6 mit den zugehörigen Polen der zweiten Anschlussarmatur 7 verbinden, zu erden und kurzzuschließen.

In der Figur 9 ist eine Sicht auf die zweite Kabelanschlussarmatur 7 der Figur 4 in Richtung der Achse A-A dargestellt. Zu erkennen ist, dass die drei Pole der zweiten Kabelanschlussarmatur 7 auf einer Kreisbahn angeordnet sind, und die Pole die Eckpunkte eines gleichseitigen Dreieckes bilden.

Die Figur 7 zeigt eine vereinfachte Darstellung eines siebenten Kabelanschlussbausteines 70. Der siebente Kabelanschlussbaustein 70 weist eine erste Kabelanschlussarmatur 6 sowie eine zweite Kabelanschlussarmatur 7 auf. Weiterhin ist der siebente Kabelanschlussbaustein 70 mit einer dritten Kabelanschlussarmatur 8 ausgestattet. Dabei ist die Anordnung der drei Kabelanschlussarmaturen 6, 7, 8 derart gewählt, dass die an die zweite Kabelanschlussarmatur 7 und die dritte Kabelanschlussarmatur 8 angeschlossenen Kabel parallel von dem siebenten Kabelanschlussbaustein 8 fortgeführt sind. Das an die erste Kabelanschlussarmatur 6 anschließbare Kabel ragt in entgegengesetzter Richtung von dem siebenten Kabelanschlussbaustein 70 fort. Die Pole der ersten, zweiten und dritten Kabelanschlussarmatur 6, 7, 8 sind mittels elektrisch leitender Leiterstücke 9 elektrisch leitend miteinander verbunden. Weiterhin kann die in der Figur 7 dargestellte siebente Kabelanschlussbaustein 70 auch mit Trennschaltern oder Erdungsschaltern ausgerüstet werden oder statt der Kabelanschlussarmaturen können Druckgas-Druckgas-Durchführungen eingesetzt werden.

Die Figur 8 zeigt einen achten Kabelanschlussbaustein 80. Mittels einer Druckgas-Druckgas-Durchführung 51 ist der achte Kabelanschlussbaustein 80 an ein druckgasisoliertes erstes Schaltfeld 81 angeflanscht. Weiterhin weist der achte Kabelanschlussbaustein 80 eine erste sowie eine zweite Kabelanschlussarmatur 6, 7 auf. Die erste und zweite Kabelanschlussarmatur 6, 7 sind dabei bezüglich der Druckgas-Druckgas-Durchführung 81 derart angeordnet, dass an die Kabelanschlussarmaturen 6, 7 angeordnete Kabel V-förmig von dem achten Kabelanschlussbaustein 80 wegstreben. Die zugehörigen Pole der ersten und zweiten Kabelanschlussarmatur 6, 7 und der Druckgas-Druckgas-Durchführung 51 sind mittels elektrischer Leiter 9 elektrisch leitend miteinander verbunden. An einem druckgasisolierten zweiten Schaltfeld 82 ist ein weiterer achter Kabelanschlussbaustein 80a angeordnet. Der weitere achte Kabelanschlussbaustein 80a entspricht in seinem Aufbau dem achten Kabelanschlussbaustein 80. Das zweite Schaltfeld 82 ist mit dem ersten Schaltfeld 81 baugleich. Wie zu erkennen ist, sind mittels einer Kabelverbindung 83 das erste Schaltfeld 81 sowie das zweite Schaltfeld 82 elektrisch leitend miteinander verbunden.

Die in den Figuren gezeigten Kabelanschlussbausteine sind derart abwandelbar, dass Kabelanschlussarmaturen durch Druckgas-Druckgas-Durchführung ersetzt sind, sowie Trennschalter sowie Erdungsschalter zusätzlich eingefügt oder durch weitere elektrische Leiterstücke ersetzbar sind. Dadurch entstehen weitere in den Figuren nicht dargestellte Kabelanschlussbausteine, welche die erfindungsgemäßen Merkmale aufweisen.

## Patentansprüche

1. Druckgasisolierter Kabelanschlussbaustein (1,20,30,40,50,60,70), insbesondere für eine druckgasisolierte Schaltanlage, wobei der Kabelanschlussbaustein (1,20,30,40,50,60,70) eine mehrpolige erste Kabelanschlussarmatur (6) und eine mehrpolige zweite Kabelanschlussarmatur (7) aufweist,
wobei die erste und die zweite Kabelanschlussarmatur (6,7) derart angeordnet sind, dass ein an die erste Kabelanschlussarmatur (6) angeschlossenes erstes Kabel und ein an die zweite Kabelanschlussarmatur (7) angeschlossenes zweites Kabel aus entgegengesetzt zueinander liegenden Richtungen am Kabelanschlussbaustein (1,20,30,40,50,60,70) auf diesen zulaufen und die Pole jeder Kabelanschlussarmatur (6,7) jeweils im Querschnitt gesehen auf einer Kreisbahn verteilt angeordnet sind.

2. Druckgasisolierter Kabelanschlussbaustein (1,20,30,40,50,60,70) nach Anspruch 1,
**gekennzeichnet durch**
eine mehrpolige dritte Anschlussvorrichtung (8,51).

3. Druckgasisolierter Kabelanschlussbaustein (1,20,30,40,50,60,70) nach Anspruch 2,
**dadurch gekennzeichnet, dass**
die dritte Anschlussvorrichtung eine mehrpolige Kabelanschlussarmatur (8) ist.

4. Druckgasisolierter Kabelanschlussbaustein (1,20,30,40,50,60,70) nach Anspruch 2,
**dadurch gekennzeichnet, dass**
die dritte Anschlussvorrichtung eine mehrpolige Druckgas/Druckgas-Durchführung (51) ist.

5. Druckgasisolierter Kabelanschlussbaustein (1,20,30,40,50,60,70) nach einem der Ansprüche 2 bis 4,
**dadurch gekennzeichnet, dass**
die dritte Anschlussvorrichtung (8, 51) bezüglich der ersten und der zweiten Anschlussarmatur (6,7) derart angeordnet ist, dass ein T-förmiges Anschließen der Kabel bzw. der elektrischen Leiter der Druckgas/Druckgas-Durchführung (51) an den Kabelanschlussbaustein ermöglicht ist.

6. Druckgasisolierter Kabelanschlussbaustein (1,20,30,40,50,60,70) nach einem der Ansprüche 1 bis 5,
**dadurch gekennzeichnet, dass**
alle abgehenden Kabel bzw. Leiter von dem Kabelanschlussbaustein (1,20,30,40,50,60,70) annähernd in einer Horizontalen annähernd parallel angeordnet sind.

7. Druckgasisolierter Kabelanschlussbaustein (1,20,30,40,50,60,70) nach einem der Ansprüche 1 bis 6,
**dadurch gekennzeichnet, dass** zwischen einander zugeordneten Polen der ersten Kabelanschlussarmatur (6) und der zweiten Kabelanschlussarmatur (7) eine elektrisch leitende Verbindung (9) angeordnet ist.

8. Druckgasisolierter Kabelanschlussbaustein (1,20,30,40,50,60,70) nach einem der Ansprüche 1 bis 7,
**dadurch gekennzeichnet, dass** zwischen einander zugeordneten Polen der ersten Kabelanschlussarmatur (6) und der zweiten Kabelanschlussarmatur (7) eine mittels Schalters (21) auftrennbare elektrische Verbindung angeordnet ist.

9. Druckgasisolierter Kabelanschlussbaustein nach Anspruch 1 oder 8,
**dadurch gekennzeichnet, dass**
die elektrisch leitende Verbindung (9) mittels eines Erdungsschalters (22) erdbar ist.

10. Druckgasisolierter Kabelanschlussbaustein (80,80a) insbesondere für eine druckgasisolierte Schaltanlage (81,52), wobei der Kabelanschlussbaustein (80,80a) eine ein- oder mehrpolige erste Kabelanschlussarmatur (6) und eine ein- oder mehrpolige zweite Kabelanschlussarmatur (7) aufweist
**dadurch gekennzeichnet, dass**
die erste und die zweite Kabelanschlussarmatur (6,7) derart angeordnet sind, dass ein an die erste Kabelanschlussarmatur (6) angeschlossenes erstes Kabel und ein an die zweite Kabelanschlussarmatur (7) angeschlossenes zweites Kabel von dem Kabelanschlussbaustein (80,80a) V-förmig auseinanderstreben.
